## Europäisches Patentamt
## European Patent Office
## Office européen des brevets

(11) Numéro de publication: **0 138 631**
**B1**

(12) ## FASCICULE DE BREVET EUROPÉEN

(45) Date de publication du fascicule du brevet:
20.05.87

(51) Int. Cl.⁴: **A 01 K 91/00,** D 07 B 1/12

(21) Numéro de dépôt: **84401188.2**

(22) Date de dépôt: **08.06.84**

(54) Procédé de realisation d'un bas de ligne de pêche.

(30) Priorité: **15.06.83 ES 523294**

(43) Date de publication de la demande:
**24.04.85 Bulletin 85/17**

(45) Mention de la délivrance du brevet:
**20.05.87 Bulletin 87/21**

(84) Etats contractants désignés:
**DE FR GB IT**

(56) Documents cité:
**FR-A-2 231 315**
**US-A-2 257 953**
**US-A-2 614 451**

(73) Titulaire: **Del Pozo Obeso, Rafael, General Mola
4-4o, Reinosa (Santander) (ES)**

(72) Inventeur: **Del Pozo Obeso, Rafael, General Mola
4-4o, Reinosa (Santander) (ES)**

(74) Mandataire: **Levy, David, c/o S.A. Fedit- Loriot 38,
avenue Hoche, F-75008 Paris (FR)**

LIBER, STOCKHOLM 1987

EP 0 138 631 B1

## Description

La présente invention se réfère à un procédé de réalisation d'un bas de ligne de pêche conforme au préambule de la revendication 1. Il est du type de ceux utilisés dans la pratique de la pêche à la "mouche", grâce auxquelles l'on renforce notablement leurs caractéristiques fonctionnelles.

Les amateurs de la pêche de la truite à la mouche savent que le lancer doit être nécessairement d'une extraordinaire précision afin d'obtenir des résultats optimaux, dans la mesure où ce genre de pêche s'effectue la plupart du temps à même la surface, le pêcheur à la mouche devant lancer celle-ci au-dessus de la truite ou du groupe de truites qu'il vient d'apercevoir. Il est tout aussi évident, par ailleurs, que les possibilités d'atteindre davantage de pièces augmentent en fonction de la distance que peut couvrir le pêcheur.

Ainsi donc, pour atteindre la plus grande efficacité, le lancer de la mouche doit être précis et, très souvent, long.

Comme on le sait également, une ligne de pêche comprend trois parties ou secteurs fondamentaux: la ligne proprement dite, le bas de ligne et le bout du bas de ligne portant lui-même à son extrémité la mouche. Le bout du bas de ligne est un court secteur à un seul filament du plus petit diamètre possible -pour que les poissons ne sentent pas sa présence-assurant une distance appropriée entre la mouche et le bas de ligne.

Le bas de ligne est l'élément qui, du fait de son moindre poids et de sa plus grande flexibilité, reçoit l'élan imprimé par la ligne, qu'il transmet et répartit à son tour au fil du bout de ligne et à la mouche, de façon contrôlée. C'est ainsi que l'élan passe de la canne à la ligne, puis de celle-ci au bas de ligne et finalement au bout du bas de ligne et à la mouche.

Il découle de ce qui précède que le bas de ligne constitue l'élément fondamental, dans la mesure où la précision du lancer et les résultats de celui-ci dépendent de sa structure et de son efficacité.

Lors du lancer, le bas de ligne décrit dans l'air une courbe et, pour que le lancer soit efficace et précis, ledit bas de ligne doit être dans le prolongement de la ligne et se comporter de façon semblable à un fouet. Pour cela, le bas de ligne doit être d'épaisseur décroissante vers l'extrémité réceptrice du bout de ligne et il doit, en outre, être flexible et élastique.

Ces exigences en vue d'une fonction optimum d'un bas de ligne sont connues depuis longtemps et, à cet égard, les bas de ligne conventionnels sont formés d'une pluralité de secteurs de différents diamètres qui, dûment noués les uns aux autres, confèrent au bas de ligne un diamètre ou section qui va en décroissant progressivement. Cependant, les noeuds existant entre les différents secteurs constituent un problème fondamental dans la mesure où ils déterminent de multiples zones d'interruption des caractéristiques de l'ensemble dans la dynamique du lancer.

En vue d'éliminer ce problème des noeds, l'on connaît des bas de ligne comprenant également un unique filament d'épaisseur décroissante mais, de par leur propre nature, ces bas de ligne s'avèrent très peu flexibles et tendent à former des boucles qui en entravent considérablement le maniement et font qu'ils sont infiniment moins opérationnels, de sorte que de tels bas de ligne, bien qu'acceptables du point de vue structurel -dans la mesure où ils assurent parfaitement la configuration conique appropriée- s'avèrent très peu intéressants du point de vue fonctionnel car il faut les chauffer avant de les utiliser pour éliminer leur tendance à la formation de spires; par ailleurs, leur rigidité réduit considérablement l'efficacité du lancer en transmettant, pour la même raison, moins bien l'énergie.

Le brevet US-A 2 614 451 décrit une canne à pêche réalisée à partir de filaments élastiques, flexibles et pouvant présenter une certaine résistance à la traction, lesdits filaments étant utilisés pour réaliser une série de mailles donnant naissance à un tube creux continu.

Le brevet US-A- 2 257 953 décrit une canne à pêche conique dans laquelle des fils de nylon ou autre sont tressés ensemble avant d'être enroulés sur une âme, le nombre de tresses enroulées sur ladite âme conférant à ladite canne les dimensions appropriées d'une extrémité à l'autre.

Dans le brevet japonais 161.120/82 il est proposé une solution qui consiste, à partir d'un filament de section constante, de confectionner, sur un support approprié, des boucles allant en nombre décroissant depuis les extrémités vers la zone médiane et reliées les unes aux autres, qui déterminaient un ensemble qui, une fois soumis à une torsion à l'une de ses extrémités, en permettait le pliage par sa zone médiane en obtenant ainsi un cordon sans noeuds, de configuration conique. Bien que très supérieur du point de vue fonctionnel à ceux précités et présentant une grande élasticité qui permet d'aborder les secousses imprimées par le poisson sans risque pour le bout de ligne -problème que présentent également de façon notoire les bas de ligne conventionnels- ce bas de ligne présente cependant une certaine tendance à l'auto-enroulement qui doit être éliminée.

Le demandeur est parvenu à la conclusion que la solution la meilleure pour obtenir les meilleures performances d'un bas de ligne est que celui-ci soit fait à partir d'une maille tubulaire à base de filaments de diamètres micrométriques d'une grande résistance, élasticité et flexibilité, maille tubulaire adoptant la configuration conique s'avérant appropriée et indispensable au bon fonctionnement des bas de ligne. En partant de cette idée de base, l'on a procédé à la confection d'une maille tubulaire sur une âme en moulage ou guide-rigide de configuration conique.

Cependant, la pratique a démontré qu'à l'issue de tractions successives exercées sur le filet ainsi obtenu, celui-ci perdait progressivement sa configuration conique et s'allongeait, en adoptant une configuration cylindrique, de telle sorte que le bas de ligne perdait la plupart des performances recherchées.

Ce problème est résolu en utilisant, au lieu d'une âme en moulage ou guide rigide destinée à être extraite une fois le filet réalisé, une âme également conique faite de filaments de diamètre micrométrique et destinés à demeurer à l'intérieur du filet en faisant partie du propre bas de ligne. Cette solution a été reprise dans une demande de brevet d'invention distincte déposée au nom du demandeur.

Bien que cette solution soit acceptable, voire appropriée lorsque l'on désire que le bas de ligne s'enfonce dans l'eau, en disposant à l'intérieur du filet un matériau plus dense que l'eau, il ne fait aucun doute que, dans les cas où l'on préfère que le bas de ligne demeure flottant, la solution la plus appropriée -en particulier parce qu'elle simplifie la structure et le processus d'obtention du bas de ligne- consiste à le fabriquer sous forme d'une maille tubulaire conique et creuse, dépourvue d'âme intérieure, en rendant inutiles les filaments de diamètre micrométrique en matériau hydrofuge constitutifs de cette dernière.

Les améliorations sur lesquelles porte l'objet de la présente invention font l'objet de la seconde partie de la revendication 1 et sont orientées précisément vers un procédé de réalisation d'un bas de ligne à base d'une maille tubulaire, creuse et continue, de configuration conique, dépourvue de tout type d'âme intérieure et sans risque que ledit tube perde avec le temps sa configuration conique initiale.

L'on a prévu en ce sens que ce tube en maille soit confectionné, à l'aide d'un métier à tresser approprié, en utilisant un nombre déterminé de fils à son extrémité initiale correspondant à son plus grand diamètre. A partir de là, et en correspondance avec des tronçons de tube de longueur préétablie, l'on procédé à l'élimination unitaire de ces fils dont le nombre est ainsi réduit progressivement, ce qui se traduit évidemment par une progressive réduction du diamètre du bas de ligne. Bien qu'en théorie une telle réduction du diamètre s'avère échelonnée, étant donné le caractère micrométrique du diamètre des filaments, dans la pratique l'on obtient une configuration conique pour le bas de ligne.

Une autre caractéristique de l'invention est le fait que le bas de ligne offre un excellent aspect esthétique et en particulier en vue d'éviter des problèmes de démaillage, l'on a prévu que les extrémités libres de chacun des filaments que l'on élimine progressivement demeurent à l'intérieur de la propre structure tubulaire de la maille.

Conformément à ce qui précéde, il est évident que si l'on maintient la vitesse de rotation du plateau du métier constante et si l'on réduit progressivement la traction exercée sur le tube résultant, l'on augmente la densité du tissage au fur et à mesure où diminue le nombre de fils collaborant à la conformation de la maille, ladite réduction du nombre de fils déterminant le rétrécissement progressif de celui-ci.

Suite à ce qui vient d'être exposé, au niveau du secteur terminal du bas de ligne, c'est-à-dire celui correspondant à la réception du bout du bas de ligne, la vitesse de traction sur le tube en maille résultant est réduite au maximum; de ce fait, on obtient une plus grande densité du tissage dans cette zone grâce à quoi, et bien que cette extrémité perde un peu de sa flexibilité, l'on en renforce la consistance en vue d'une meilleure transmission de l'effort du lancer au bout de ligne.

On peut obtenir le même effet en maintenant constante la vitesse de traction sur la maille et en variant la vitesse de rotation et de translation des fuseaux (ou son équivalent mécanique) du métier à tresser, de telle façon qu'en diminuant le nombre de monofils qui conforment la maille, la vitesse de rotation du métier à tresser augmente progressivement de manière préalablement calculée, d'où une augmentation de la densité du tissu.

On peut également avoir recours à une combinaison de variation de vitesses, aussi bien de la traction sur la maille que de la vitesse de rotation du métier à tresser, ces changements pouvant être simultanés, successifs, alternatifs, etc., ce qui permet une grande variété de combinaisons aboutissant à l'obtention d'une tresse continue, creuse et conique avec les caractéristiques optimales désirées, non seulement dans les diamètres décroissants et successifs, mais aussi dans les densités de tissage nécessaires.

Il ressort de tout ce qui précède que la structure tubulaire en maille faite de filaments de diamètre micrométique et dépourvue de tout type d'âme intérieure, sur laquelle se basent les améliorations faisant l'objet de la présente invention, détermine pour le bas de ligne un degré optimum de flexibilité et d'élasticité assurant le plus haut niveau d'efficacité de son maniement, tandis que sa nature creuse lui confère une grande flottabilité dans la mesure où son âme joue le rûle de chambre à air.

Cette structure à base de maille tubulaire permet également dans ce cas d'effectuer l'évasement des extrémités au bas de ligne, en vue de l'adaptation des filaments micrométriques à la ligne ou au bout de ligne et la fixation simple et pratiquement instantanée au moyen d'un adhésif, tel que du cyanoacrylate ou autre, en recourant éventuellement à une minuscule bague tubulaire en matière plastique ou autre, qui appuie les filaments contre la ligne ou le bout de ligne pendant le bref laps de temps que requiert le séchage de l'adhésif.

## Revendications

1. Procédé de réalisation d'un bas de ligne de pêche, dans lequel on utilise des filaments en matière élastique et flexible et d'une haute résistance à la traction, filaments à partir desquels on réalise une série de mailles donnant naissance à une tresse en forme de tube creux et continu, caractérisé en ce que les filaments ont un diamètre micrometrique et ledit tube a dans le sens longitudinal une configuration conique, et en ce qu'on initie la confection de la tresse avec un nombre déterminé de ces filaments micrométriques, nombre allant en décroissant unitairement et progressivement tout au long du bas de ligne, de façon à réaliser la configuration conique, grâce à l'élimination successive de ces filaments, de sorte que la variation des caractéristiques du tissage pendant la confection de la série de mailles -par réduction de la vitesse d'entraînement du tissage ou par majoration de la rotation du métier à tresser combinée avec la progessive diminution du nombre de filaments utilisés- détermine une progressive réduction du diamètre de la tresse, en obtenant ainsi la configuration conique désirée.

2. Procédé de réalisation d'un bas de ligne de pêche selon la revendication 1, caractérisé en ce que le secteur terminal de chacun des filaments de diamètre micrométrique qui sont successivement éliminés du tissage, est logé à l'intérieur du propre tube en maille pour en éviter le démaillage.

3. Procédé de réalisation d'un bas de ligne de pêche selon l'une des revendications précédentes, caractérisé en ce que, tout en maintenant la vitesse de rotation et de translation des fuseaux du métier à tresser, ou de l'équivalent mécanique du métier à tresser, on réduit la vitesse de traction exercée sur ledit tube en maille et vice-versa, ou on modifie simultanément les deux vitesses de rotation et de traction et l'on obtient une densité progressivement supérieure du tressage qui atteint son plus haut niveau à l'extrémité réceptrice du bout du tube, de manière à obtenir une consistance supérieure qui renforce la capacité de transmission de l'effort du lancer au bout du bas de ligne.

## Patentansprüche

1. Verfahren zur Herstellung eines Endes einer Angelschnur unter Verwendung von Fäden aus einem elastischen und flexiblen Material von hohem Zugwiderstand, wobei aus den Fäden eine Folge von Maschen gefertigt wird, aus denen ein ununterbrochenes Schlauchgeflecht gebildet wird, dadurch gekennzeichnet, daß die Fäden einen mikrometrischen Durchmesser haben und der Schlauch in seiner Längsrichtung eine konische ausgestaltung aufweist und daß die Anfertigung des Geflechts mit einer vorbestimmten Anzahl der mikrometrischen Fäden beginnt, deren Anzahl sich einheitlich und fortschreitend auf der gesamten Länge des Schnurendes zur ausbildung der konischen Gestaltung auf Grund einer aufeinanderfolgenden Eliminierung von Fäden vermindert, so daß die Änderung in den Kenndaten des Geflechts während der Anfertigung der Folge der Maschen - durch Verminderung der Antriebsgeschwindigkeit des Geflechts oder durch Erhöhung der Drehzahl des Flechtstuhls in Verbindung mit der fortschreitenden Verminderung der verwendeten Anzahl von Fäden - eine fortschreitende Durchmesserverminderung des Geflechts bestimmt, um somit die gewünschte konische Gestaltung zu erlangen.

2. Verfahren zur Herstellung eines Endes einer Angelschnur nach Anspruch 1, dadurch gekennzeichnet, daß der Endabschnitt eines jeden der Fäden von mikrometrischem Durchmesser, die aufeinanderfolgend aus dem Geflecht eliminiert werden, im Inneren des eigentlichen Schlauchgeflechts aufgenommen ist, um ein auflösen des Geflechts zu unterbinden.

3. Verfahren zur Herstellung eines Endes einer Angelschnur nach einen der vorhergehenden Ansprüche, dadurch gekennzeichnet, daß man bei Beibehaltung der Umlaufgeschwindigkeit und der translatorischen Bewegung der Spindeln des Flechtstuhls oder des äquivalenten Mechanismus des Flechtstuhls die auf das Schlauchgeflecht ausgeübte Transportgeschwindigkeit herabsetzt und umgekehrt oder daß man gleichzeitig sowohl die Umlaufgeschwindigkeit wie auch die Transportgeschwindigkeit ändert und man dadurch eine fortschreitend höhere Dichte des Geflechts erhält, die ihren höchsten Wert am anschlußende des Schlauchendes erreicht, so daß eine größere Haltbarkeit erhalten wird, die die Übertragungsleistung der Wurfkraft auf das Vorfach verstärkt.

## Claims

1. Method of producing a braided fishing line leader in which filaments of an elastic or flexible material with a high resistance to traction are used, filaments from which a series of hitches is produced giving rise to a braid in the form of a hollow, continuous tube, characterized in that the filaments have a micrometric diameter, said tube having a tapering configuration in the longitudinal direction, and in that construction of the braid is begun with a predetermined number of these micrometric filaments, the number decreasing in units and progressively along the length of said braided tube, in order to achieve the tapering configuration through the successive elimination of filaments, in such a way that the interweaving characteristics during production of the series of hitches - reducing the speed of interweaving or increasing the rotation of the braiding machine combined with the progressive reduction in the number of filaments useddetermine a progressive reduction in the diameter of the braid, thus achieving the required conical shape.

2. Method of producing a cast according to claim 1, characterized in that the end section of each of the micrometric diameter filaments successively eliminated from the interweaving, is located inside the braided tube to prevent unravelling.

3. Method of producing a cast according to one of the preceding claims, characterized in that at the same time as maintaining the speed of rotation and translation of the spindles of the braiding machine, or equivalent mechanism of the braiding machine, the traction speed exercised on said braided tube is reduced and vice-versa, or the rotation and traction speeds are simultaneously modified to obtain a progressively increased braid density which is at its greatest at the receiving end of the end of the tube, in such a way as to provide a superior consistency which reinforces the transmission of the casting force to the end of the cast.